# EUROPÄISCHE PATENTSCHRIFT

(11) **EP 1 120 345 B1**
(45) Veröffentlichungstag und Bekanntmachung des Hinweises auf die Patenterteilung: **15.09.2004**
(21) Anmeldenummer: 01810017.2
(22) Anmeldetag: 09.01.2001
(51) Int. Cl.: B65B 51/30

(54) **Vorrichtung zum versiegeln eines verpackungsschlauches**
Apparatus for sealing tubular packaging
Dispositif pour sceller des emballages tubulaires

(30) Priorität: 27.01.2000 CH 1622000
(43) Veröffentlichungstag der Anmeldung: 01.08.2001
(73) Patentinhaber: SIG Pack Systems AG, 8222 Beringen (CH)
(72) Erfinder: Strasser, Thomas, 8463 Benken (CH)
(74) Vertreter: Clerc, Natalia

(56) Entgegenhaltungen:
- US-A- 4 102 111
- US-A- 4 455 808
- US-A- 4 862 673
- US-A- 5 351 464

## Beschreibung

In Schlauchbeutel-Verpackungsmaschinen wird um die zu verpackenden Produkte zunächst ein Schlauch aus Verpackungsfolie gebildet und der Schlauch längs versiegelt. In einer Quersiegelstation werden zwischen den Produkten Quersiegelnähte gebildet und diese in der Mitte getrennt, so dass Einzelpackungen entstehen.

In herkömmlichen Quersiegelstationen zum Beispiel gemäss der EP-A-399 948 laufen einander gegenüberliegende Siegelbacken und Gegenbacken mit koaxial zu den Drehachsen verlaufenden, zylindrischen Siegelflächen und Gegenflächen um. Die maximale Transportgeschwindigkeit des Schlauches ist bei diesen Quersiegelstationen begrenzt, weil die Wärmeleitung von den Siegelbacken durch die Folie bis zur Siegelschicht eine gewisse Zeit beansprucht.

Es ist deshalb bekannt, in Transportrichtung mitlaufende, parallel zu sich selbst umlaufende Siegelbacken und Gegenbacken vorzusehen. Damit kann die Produktionskapazität erhöht werden. Ein Beispiel einer solchen Quersiegelstation ist in der WO-A-96/17720 beschrieben. Weitere derartige Siegelstationen sind in der EP-B-560 988 und der DE-C-27 51 928 beschrieben. Diese Quersiegelstationen sind relativ kompliziert im Aufbau und daher aufwendig in der Herstellung und im Unterhalt. Ausserdem verursachen die in Transportrichtung hin und her bewegten Massen Schwingungen, die sich auf die ganze Verpackungsmaschine übertragen.

US-A-5 351 464 offenbart eine Vorrichtung zum Versiegeln eines Verpackungsschlauchs, bei welcher die Siegelbacken jeweils um eine Achse rotierbar sind. Die zwei Siegelbacken sind identisch ausgebildet. Die Siegelbackeneinheit ist über ein Getriebe mit einer Schneidvorrichtung gekoppelt. Bei US' 464 berühren sich die zwei Siegelbacken in einer einzigen Linie, welche stets am gleichen Ort bezüglich der Transportrichtung verbleibt. Die Verpackungsfolie, welche zwischen den zwei Siegelbacken hindurch gefördert wird, kontaktiert jeweils mit derselben Folienstelle die Siegelbacken nur während einer kurzen Zeit, nämlich genau während derjenigen Zeit, welche sie für das Passieren der ortsfesten Berührungslinie der zwei Siegelbacken benötigt.

Auch US-A-4 455 808 beschreibt zwei Siegelbacken, welche jeweils um eine Achse rotierbar sind und sich in einer ortsfesten Berührungslinie treffen.

US-A-4 862 673 offenbart zwei rotierbare Siegelbacken, wobei die Achse einer dieser Siegelbacken entlang einer Kurvenbahn bewegt wird.

Der vorliegenden Erfindung liegt die Aufgabe zugrunde, eine Vorrichtung der eingangs genannten Art derart weiterzubilden, dass bei einfachem Aufbau eine hohe Verpackungskapazität erzielt werden kann. Diese Aufgabe wird durch die kennzeichnenden Merkmale des Anspruchs 1 gelöst.

Nachfolgend wird ein Ausführungsbeispiel der Erfindung anhand der Zeichnungen erläutert. Darin zeigt:
- Figur 1: eine perspektivische Ansicht eines Teils einer Quersiegelvorrichtung,
- Figur 2: eine perspektivische Ansicht der vertikal beweglichen Welle der einen Siegelbacken,
- Figur 3: einen Teilquerschnitt,
- Figur 4: eine schematische Darstellung der Funktionsweise,
- Figuren 5a-5d: den Ablauf der Querversiegelung, und
- Figuren 6a-6c: drei Varianten der Ausbildung der Peripherie.

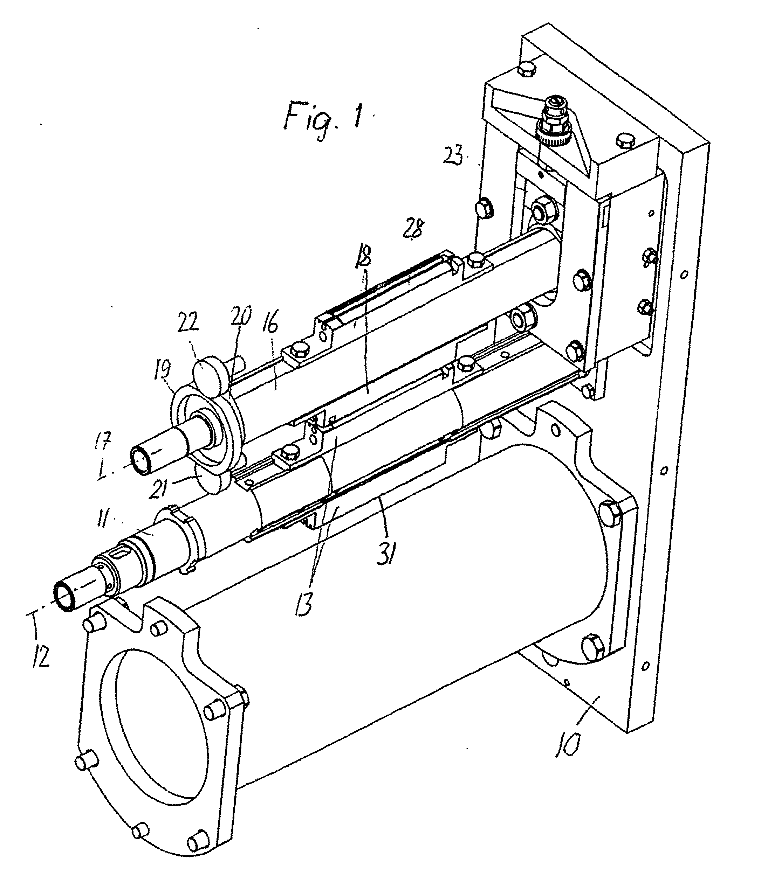

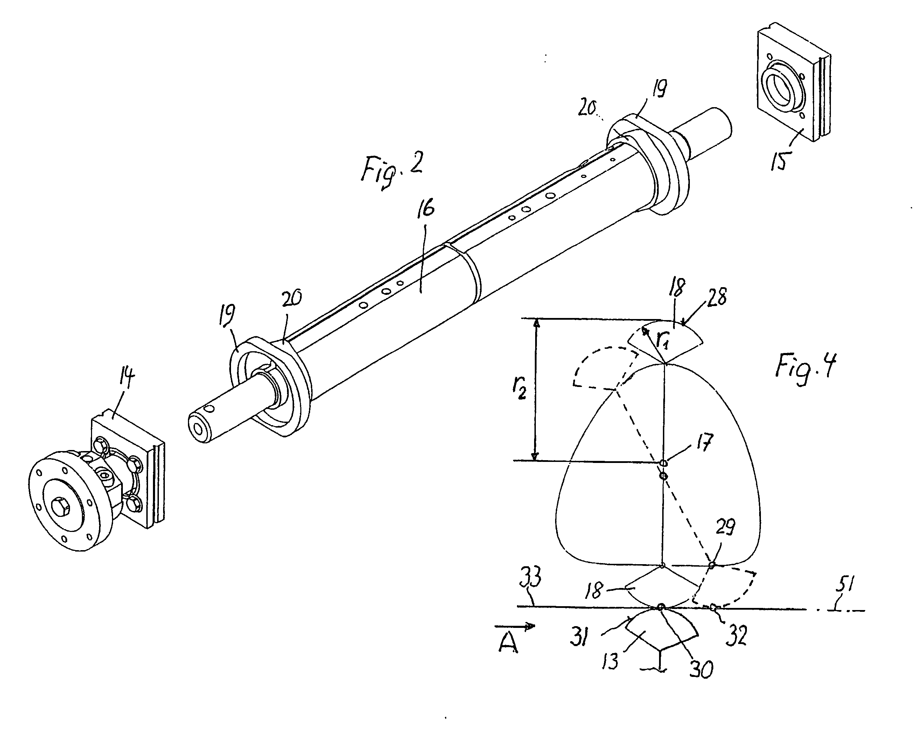

Die Vorrichtung nach Figuren 1-3 umfasst ein Gehäuse 10, in welchem eine erste Welle 11 um eine Achse 12 drehbar gelagert ist. Auf der Welle 11 sind gegenüberliegend zwei Siegelbacken 13 befestigt. Im Gehäuse 10 sind auf gegenüberliegenden Seiten zwei Schlitten 14, 15 vertikal, das heisst quer zur Transportrichtung A des Verpackungsschlauches 33, verschiebbar geführt. In diesen Schlitten 14, 15 ist eine zweite Welle 16 um eine zur Achse 12 parallele Achse 17 drehbar gelagert. Auf der Welle 16 sind zwei weitere Siegelbacken 18 einander gegenüberliegend befestigt. Beidseitig sind auf der Welle 16 je zwei Kurvenscheiben 19, 20 befestigt. Die eine dieser Kurvenscheiben 20 rollt auf einer gehäusefest gelagerten Rolle 21 ab. Die andere Kurvenscheibe 19 läuft auf je einer Rolle 22 ab, die in je einem weiteren, vertikal im Gehäuse 10 verschiebbar gelagerten Schlitten 23 drehbar gelagert sind. Die beiden Schlitten 23 sind durch Federn 24 nach unten gegen die Rollen 21 belastet.

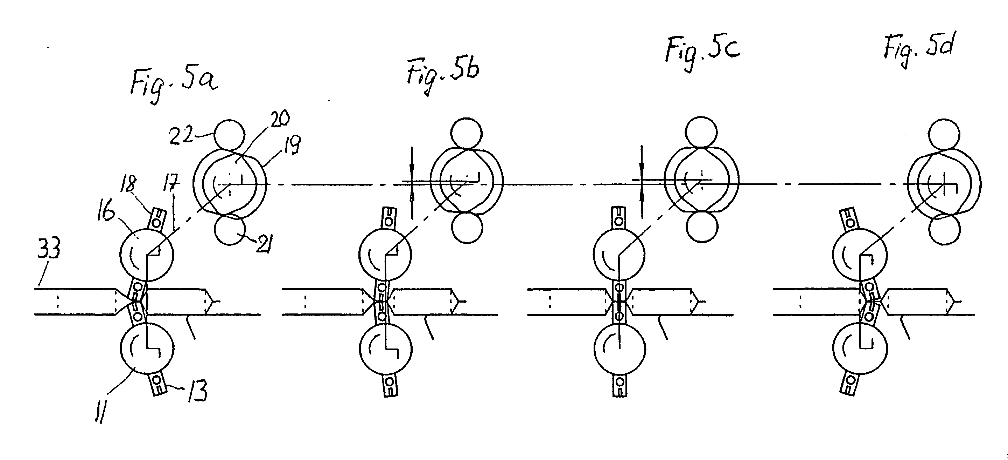

Wie aus Figur 4 ersichtlich ist, ist die Peripherie 28 der Siegelbacken 13, 18 zylindrisch, im dargestellten Ausführungsbeispiel kreiszylindrisch um eine Achse 29, die zwischen der Scheitellinie 30 der Backen 13, 18 und der betreffenden Achse 12 beziehungsweise 17 der Wellen 11, 16 und parallel zu dieser liegt. Vorzugsweise ist der Radius r₁ der Peripherie 28 höchstens halb so gross wie der Abstand r₂ der Scheitellinie 30 von der Drehachse 17. Der Querschnitt der zylindrischen Peripherie 28 kann jedoch auch anders als kreisförmig, zum Beispiel elliptisch, ausgebildet werden. Jedenfalls ist der Krümmungsradius der Peripherie 28 über ihre gesamte, in Umfangsrichtung gemessene Länge geringer als r₂. Die Kurvenscheiben 19, 20 sind derart ausgebildet, dass die Achse 17 während der Drehbewegung der Welle 16 und während des Siegelvorgangs die in Figur 4 und Figur 5a-5d gezeigte synchrone Vertikalbewegung ausführt, derart, dass die Peripherie 28 der Siegelbacken 18 gegen die entsprechende Peripherie 31 der Siegelbacken 13 gepresst ist. Wie aus Figur 4 ersichtlich ist, verschiebt sich dabei die Berührungslinie 32 der beiden Backen 18, 13 während des Siegelvorgangs in Transportrichtung A des Verpackungsschlauches 33. Dadurch wird eine längere Siegelzeit erreicht oder bei gleicher Siegelzeit eine grössere Transportgeschwindigkeit des Schlauches 33 als bei herkömmlichen Siegelbacken, deren Krümmungsradius dem Abstand r₂ entspricht. Die minime Vertikalbewegung der Siegelbacken 18 verursacht nur sehr geringe Vibrationen und keine Vibrationen in Transportrichtung A wie bei herkömmlichen, parallel um- und mitlaufenden Quersiegelbacken. Vibrationen in Längsrichtung sind vor allem deshalb unerwünscht, weil sie den regelmässigen Abstand der zu verpackenden Produkte voneinander beeinträchtigen können. Die Vorrichtung benötigt nur wenige Einzelteile und ist deshalb kostengünstig in der Herstellung und im Unterhalt. Wegen der gefederten Rollen 22 tritt in Vertikalrichtung kein Spiel auf. Um die Massenkräfte weiter zu minimieren, ist die vertikal bewegte Welle 16 hohl ausgebildet. Die beschriebene Vorrichtung eignet sich natürlich nicht nur für horizontale, sondern auch für vertikale Schlauchbeutel-Verpackungsmaschinen.

In Figur 4 ist die Variante dargestellt, in welcher die beiden Wellen 11, 16 vertikal synchron gegeneinander zu und voneinander weg bewegt werden, die Berührungslinie 32 also in einer Ebene durchläuft. Bei dieser Variante ist also die Welle 11 ebenfalls mittels zweier Schlitten vertikal beweglich geführt und beidseitig durch weitere Kurvenscheiben entsprechend den Scheiben 19, 20 und Rollen entsprechend den Rollen 21, 22 zwangsgesteuert. Die Lagerung der Welle 11 ist spiegelsymmetrisch zur Lagerung der Welle 16 mit den Elementen 14, 15 und 19 bis 24 bezüglich der mittelsenkrechten Ebene 51 der beiden Achsen 12, 17. Bei der in Figuren 1-3 dargestellten Variante, bei welcher die Welle 11 gehäusefest gelagert ist, verläuft die Bahn der Berührungslinie 32 dagegen leicht zylindrisch.

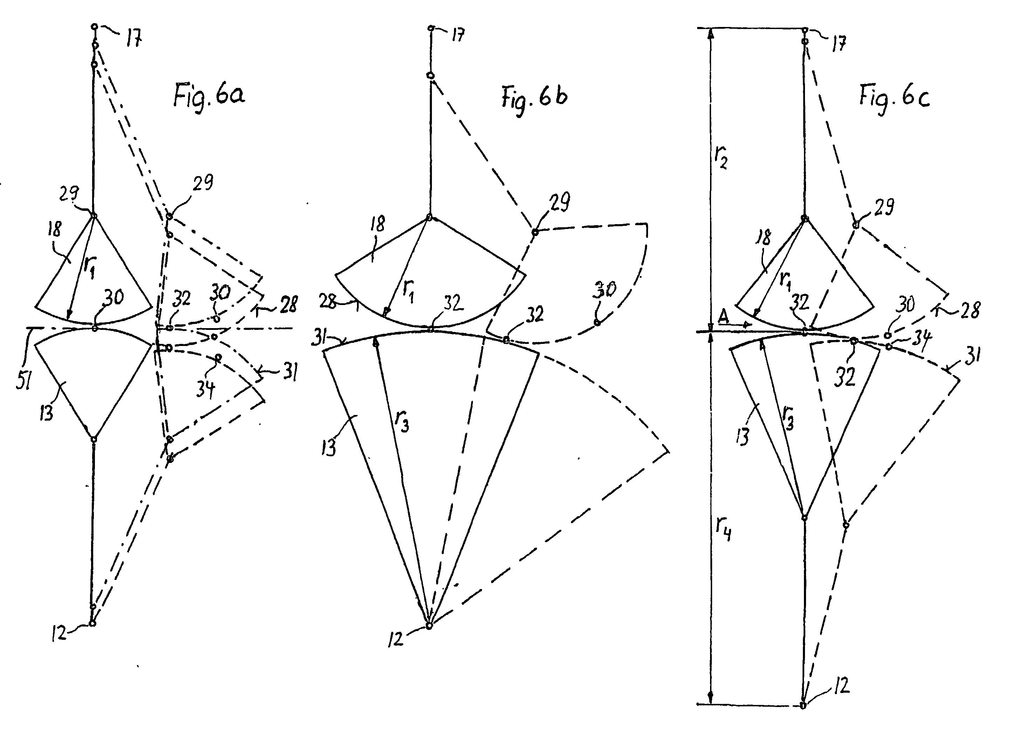

Figuren 6a-6c zeigen Varianten der Ausbildung der Peripherie 28, 31 der Siegelbacken 13, 18. Figur 6a entspricht der Darstellung nach Figur 4, wobei die ausgelenkte strichpunktierte Stellung der Siegelbacken 13, 18 der Variante entspricht, bei der beide Achsen 12, 17 zur mittelsenkrechten Ebene 51 hin und von ihr weg bewegt werden. Die gestrichelt gezeichnete Stellung entspricht dagegen der Variante, bei welcher die Achse 12 gehäusefest gelagert ist. Die erstere Variante hat den Vorteil, dass auch Vertikalschwingungen nicht auf das Gehäuse 10 übertragen werden, wenn die bewegten Massen der Wellen 11, 16 gleich sind, weil diese Wellen 11, 16 exakt im Gegentakt schwingen. Die zweite Variante hat dagegen den Vorteil, dass sie einfacher im Aufbau ist.

Figur 6b zeigt eine Variante, bei welcher die Achse 12 gehäusefest und die kreiszylindrische Peripherie 31 koaxial zur Achse 12 ist. Wie ersichtlich, erfordert diese Variante für die gleiche maximale Wegstrecke in Transportrichtung A der Berührungslinie 32 in Umfangsrichtung längere Peripherien 28, 31. Die symmetrische Variante nach Figur 6a wird deshalb vorgezogen.

In 6c ist die allgemeinere Variante dargestellt, in welcher sowohl die Krümmungsradien r₁ und r₃ der Peripherie 28, 31 der Siegelbacken 13, 18 als auch die Abstände r₂ und r₄ der Scheitellinien 30, 34 der Peripherie 28, 31 von deren Achsen 12, 17 unterschiedlich sind. Es wäre zum Beispiel denkbar, r₄ = 3r₂/2 zu wählen und auf der Welle 11 dementsprechend drei statt zwei Siegelbacken 13 über den Umfang gleichmässig verteilt anzuordnen. Das Übersetzungsverhältnis des Getriebes 44, 45 wäre entsprechend anzupassen oder es könnten zwei separat gesteuerte Servomotoren 42 mit den beiden Wellen 11, 16 verbunden werden.

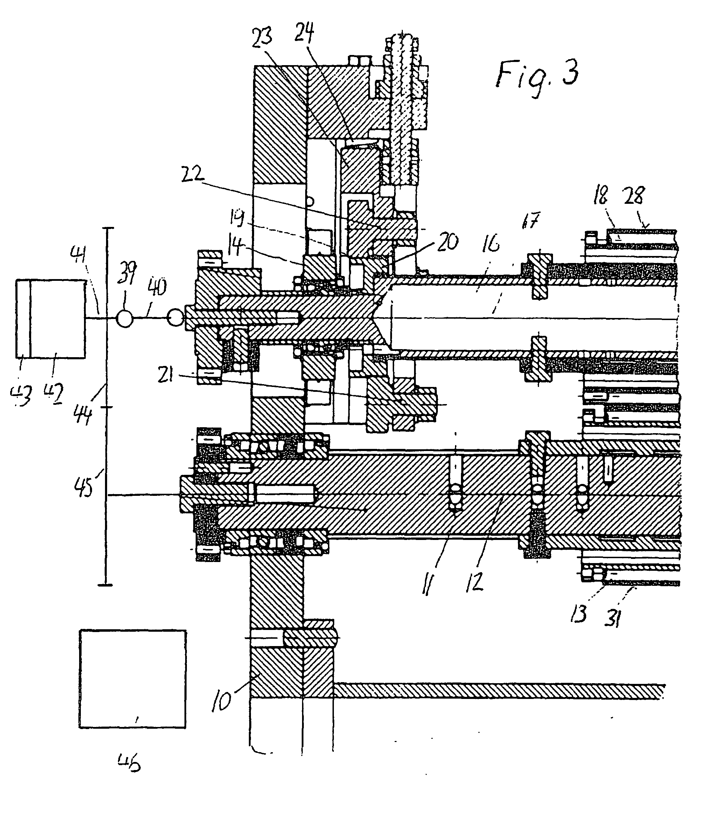

Gemäss Figur 3 ist die Welle 16 über zwei Kardangelenke 39 und eine Kardanwelle 40 mit einer Abtriebswelle 41 eines Servomotors 42 und einem Drehwinkelfühler 43 verbunden. Die Welle 41 ist über zwei gleich grosse Zahnräder 44, 45 mit der Welle 11 verbunden. Der Motor 42 und der Fühler 43 sind mit einer Steuereinrichtung 46 verbunden, welche die Drehwinkel der Wellen 11, 16 mit dem Vorschub des Verpackungsschlauches 33 synchronisiert. Die Drehwinkelgeschwindigkeit der Wellen 11, 16 wird derart geregelt, dass die Komponente der Umlaufgeschwindigkeit der Peripherie 28 in Transportrichtung während der Versiegelung gleich der Transportgeschwindigkeit des Verpackungsschlauches 33 ist.

## Patentansprüche

1. Vorrichtung zum Versiegeln eines Verpackungsschlauches (33) aus Verpackungsfolie, umfassend:
- eine um eine erste Achse (17) umlaufende erste Siegelbacke (18) mit einer zylindrischen ersten Peripherie (28), die eine zur ersten Achse (17) parallele erste Scheitellinie (30) grössten ersten Abstandes (r₂) von der ersten Achse (17) aufweist, wobei ein erster Krümmungsradius (r₁) der ersten Peripherie (28) über deren gesamte in Umfangsrichtung gemessene Länge geringer ist als der erste Abstand (r₂),
- eine um eine zweite Achse (12) gegenläufig synchron zur ersten Siegelbacke (18) umlaufende zweite Siegelbacke (13) mit einer zylindrischen zweiten Peripherie (31), wobei die zweite Achse (12) parallel zur ersten Achse (17) ist, und
- eine Einrichtung (13, 14, 19, 20, 21, 22) zum Bewegen der ersten Achse (17) relativ zur zweiten Achse (12)
**dadurch gekennzeichnet, dass** die relative Bewegung der zwei Achsen quer zu
einer Transportrichtung (A) des Schlauches (33) derart erfolgt, dass die erste Peripherie (28) auf der zweiten Peripherie (31) unter Zwischenlage des Schlauches (33) abrollt, wobei sich eine Berührungslinie (32) zwischen den Siegelbacken (18, 13 ) und dem Schlauch (33) während der Versiegelung in Transportrichtung (A), verschiebt,
und dass die erste und zweite Achse (17, 12) wahrend der Bewegung nicht in Transportrichtung bewegt sind.

2. Vorrichtung nach Anspruch 1, wobei die zweite Peripherie (31) eine zur zweiten Achse (12) parallele zweite Scheitellinie (34) grössten zweiten Abstandes (r₄) von der zweiten Achse (12) aufweist und ein zweiter Krümmungsradius (r₃) der zweiten Peripherie (31) über deren gesamte in Umfangsrichtung gemessene Länge geringer ist als der zweite Abstand (r₄).

3. Vorrichtung nach Anspruch 2, wobei der erste Abstand (r₂) gleich dem zweiten Abstand (r₄) ist.

4. Vorrichtung nach Anspruch 3, wobei die Peripherie (28, 31) der Siegelbacken (13, 18) symmetrisch zur gemeinsamen Ebene der Scheitellinie (30, 34) und der betreffenden Achse (12, 17) ist.

5. Vorrichtung nach Anspruch 4, wobei die beiden Peripherien (28, 31) bezüglich einer mittelsenkrechten Ebene (51) der beiden Achsen (12, 17) spiegelsymmetrisch ausgebildet sind.

6. Vorrichtung nach Anspruch 5, wobei die beiden Peripherien (28, 31) kreiszylindrisch ausgebildet sind.

7. Vorrichtung nach einem der Ansprüche 1 bis 6, wobei der erste Krümmungsradius (r₁) höchstens die Hälfte des ersten Abstandes (r₂) beträgt.

8. Vorrichtung nach einem der Ansprüche 1 bis 7, wobei die Relativbewegung der Achsen (12, 17) quer zur Transportrichtung (A) durch Steuermittel (19, 20) mit dem Umlaufwinkel der Siegelbacken (13, 18) synchronisiert ist.

9. Vorrichtung nach einem der Ansprüche 1-8, wobei Antriebswellen (11, 16) der Siegelbacken (13, 18) durch einen Servomotor (42) angetrieben sind, und wobei der Drehwinkel der Siegelbacken (13, 18) durch eine Steuereinrichtung (46) derart gesteuert ist, dass während des gesamten Siegelvorgangs die in Transportrichtung (A) gemessene Komponente der Umlaufgeschwindigkeit der Peripherie (28, 31) an der Berührungslinie (32) annähernd gleich der Transportgeschwindigkeit des Schlauches (33) ist.

10. Vorrichtung nach einem der Ansprüche 1-9, wobei die Relativbewegung der Achsen (12, 17) quer zur Transportrichtung (A) durch ein Kurvenscheibengetriebe (19, 20) gesteuert ist.

11. Vorrichtung nach Anspruch 10, wobei das Getriebe zwei getrennte, gemeinsam angetriebene Kurvenscheiben (19, 20) für die Zustellbewegung und die Abrückbewegung der Siegelbacken (13, 18) voneinander aufweist.

12. Vorrichtung nach Anspruch 11, wobei die Kurvenscheiben (19, 20) auf mindestens einer der Antriebswellen (11, 16) der Siegelbacken (13, 18) starr montiert sind und eine erste dieser Kurvenscheiben (20) auf einer gehäusefest gelagerten ersten Rolle (21) und die zweite Kurvenscheibe (19) in einer parallel zur gemeinsamen Ebene der Achsen (12, 17) der beiden Antriebswellen (11, 16) verschiebbar gelagert und mittels Pressmitteln (24) in Richtung der zweiten Kurvenscheibe (19) vorbelastet ist.

13. Vorrichtung nach einem der Ansprüche 1-12, wobei auf jeder Antriebswelle (11, 16) mehrere Siegelbacken (13, 18) gleichmässig über den Umfang verteilt montiert sind.

## Claims

1. Apparatus for sealing a tubular packaging sleeve (33) made of packaging film, comprising:
a first sealing jaw (18), which circulates about a first axis (17) and has a first cylindrical periphery (28), which has a first vertex line (30) which is parallel to, and at a maximum first distance (r₂) from, the first axis (17), a first radius of curvature (r₁) of the first periphery (28) being smaller, over the entire circumferentially measured length of this periphery, than the first distance (r₂),
a second sealing jaw (13), which circulates about a second axis (12) in the opposite direction to, and synchronously with, the first sealing jaw (18) and has a second cylindrical periphery (31), the second axis (12) being parallel to the first axis (17), and
a device (13, 14, 19, 20, 21, 22) for moving the first axis (17) relative to the second axis (12),
**characterized in that** the two axes move relative to one another transversely to a transporting direction (A) of the tubular sleeve (33) such that the first periphery (28) rolls on the second periphery (31) with the interposition of the tubular sleeve (33), a line of contact (32) between the sealing jaws (18, 13) and the tubular sleeve (33) being displaced in the transporting direction (A) during the sealing operation, and **in that** the first and second axes (17, 12) are not moved in the transporting direction during the movement.

2. Apparatus according to Claim 1, in which the second periphery (31) has a second vertex line (34) which is parallel to, and at a maximum second distance (r₄) from, the second axis (12), and a second radius of curvature (r₃) of the second periphery (31) is smaller, over the entire circumferentially measured length of this periphery, than the second distance (r₄).

3. Apparatus according to Claim 2, in which the first distance (r₂) is equal to the second distance (r₄).

4. Apparatus according to Claim 3, in which the periphery (28, 31) of the sealing jaws (13, 18) is symmetrical to the common plane of the vertex line (30, 34) and the relevant axis (12, 17).

5. Apparatus according to Claim 4, in which the two peripheries (28, 31) are designed in a mirror-symmetrical manner in relation to a centre perpendicular plane (51) of the two axes (12, 17).

6. Apparatus according to Claim 5, in which the two peripheries (28, 31) are of circular cylindrical design.

7. Apparatus according to one of Claims 1 to 6, in which the first radius of curvature (r₁) is equal to not more than half the first distance (r₂).

8. Apparatus according to one of Claims 1 to 7, in which the relative movement of the axes (12, 17) in the direction transverse to the transporting direction (A) is synchronized by control means (19, 20) with the angle of circulation of the sealing jaws (13, 18).

9. Apparatus according to one of Claims 1-8, in which drive shafts (11, 16) of the sealing jaws (13, 18) are driven by a servomotor (42), and in which the angle of rotation of the sealing jaws (13, 18) is controlled by a control device (46) such that, throughout the sealing operation, the circulatory-speed component measured in the transporting direction (A) for the periphery (28, 31) at the line of contact (32) is more or less equal to the transporting speed of the tubular sleeve (33).

10. Apparatus according to one of Claims 1-9, in which the relative movement of the axes (12, 17) in the direction transverse to the transporting direction (A) is controlled by a cam disc mechanism (19, 20).

11. Apparatus according to Claim 10, in which the mechanism has two separate, jointly driven cam discs (19, 20) for moving the sealing jaws (13, 18) towards one another and away from one another.

12. Apparatus according to Claim 11, in which the cam discs (19, 20) are fitted rigidly on at least one of the drive shafts (11, 16) of the sealing jaws (13, 18), and a first of these cam discs (20) runs on a first, housing-mounted roller (21) and the second cam disc (19) being mounted such that it can be displaced parallel to the common plane of the axes (12, 17) of the two drive shafts (11, 16) and being biased by pressing means (24) in the direction of the second cam disc (19).

13. Apparatus according to one of Claims 1-12, in which a plurality of sealing jaws (13, 18) are distributed uniformly over the circumference of each drive shaft (11, 16).

## Revendications

1. Dispositif de scellage d'un tube d'emballage (33) constitué d'une feuille d'emballage, comportant un premier sabot de scellage (18) avec une première périphérie cylindrique (28) tournant autour d'un premier axe (17), laquelle périphérie (28) présente une première ligne de sommet (30) parallèle au premier axe (17) située à une première distance (r₂) plus grande dudit premier axe (17), la longueur totale d'un premier rayon de courbure (r₁) de la première périphérie (28), mesurée dans le sens circonférentiel, étant inférieure à la première distance (r₂), un second sabot de scellage (13) avec une seconde périphérie cylindrique (31) tournant autour d'un second axe (12) de manière synchrone dans le sens contraire du premier sabot de scellage (18), ledit second axe (12) étant parallèle au premier axe (17), et un dispositif (13, 14, 19, 20, 21, 22) pour déplacer le premier axe (17) par rapport au second axe (12), **caractérisé en ce que** le déplacement relatif des deux axes transversalement à un sens de transport (A) du tube (33) a lieu de telle sorte que la première périphérie (28) tourne sur la seconde périphérie (31) avec le tube (33) en position intermédiaire, une ligne de contact (32) entre les sabots de scellage (18, 13) et le tube (33) se déplaçant dans le sens de transport (A) pendant le scellage, et **en ce que** le premier axe et le second axe (17, 12) ne sont pas déplacés dans le sens de transport pendant ledit déplacement.

2. Dispositif selon la revendication 1, la seconde périphérie (31) présentant une seconde ligne de sommet (34) parallèle au second axe (12) située à une seconde distance (r₄) plus grande dudit second axe (12) et une longueur totale d'un second rayon de courbure (r₃) de ladite seconde périphérie (31), mesurée dans le sens circonférentiel, étant inférieure à la seconde distance (r₄).

3. Dispositif selon la revendication 2, la première distance (r₂) étant égale à la seconde distance (r₄).

4. Dispositif selon la revendication 3, la périphérie (28, 31) des sabots de scellage (13, 18) étant symétrique par rapport au plan commun de la ligne de sommet (30, 34) et de l'axe correspondant (12, 17).

5. Dispositif selon la revendication 4, les deux périphéries (28, 31) étant conformées de manière à présenter une symétrique spéculaire par rapport à un plan perpendiculaire médian (51) entre les deux axes (12, 17).

6. Dispositif selon la revendication 5, les deux périphéries (28, 31) étant conformées de manière cylindrique circulaire.

7. Dispositif selon l'une quelconque des revendications 1 à 6, le premier rayon de courbure (r₁) étant au maximum égal à la moitié de la première distance (r₂).

8. Dispositif selon l'une quelconque des revendications 1 à 7, le déplacement relatif des axes (12, 17) transversalement au sens de transport (A) étant synchronisé avec la rotation angulaire des sabots de scellage (13, 18) par des moyens de commande (19, 20).

9. Dispositif selon l'une quelconque des revendications 1 à 8, des arbres d'entraînement (11, 16) des sabots de scellage (13, 18) étant entraînés par un servomoteur (42) et la rotation angulaire des sabots de scellage (13, 18) étant réglée par un dispositif de commande (46) de telle sorte que la composante de la vitesse circonférentielle de la périphérie (28, 31) mesurée dans le sens de transport (A) à la ligne de contact (32) soit à peu près égale à la vitesse de transport du tube (33) pendant tout le processus de scellage.

10. Dispositif selon l'une quelconque des revendications 1 à 9, le déplacement relatif des axes (12, 17) transversalement au sens de transport (A) étant commandé par une commande à came (19, 20).

11. Dispositif selon la revendication 10, la commande présentant deux disques à came (19, 20) séparés l'un de l'autre et entraînés en commun, destinés à déplacer les sabots de scellage (13, 18) en position avancée et en position rétractée.

12. Dispositif selon la revendication 11, les disques à came (19, 20) étant montés de façon rigide sur au moins un des arbres d'entraînement (11, 16) des sabots de scellage (13, 18) et un premier desdits disques à came (20) étant logé de manière à pouvoir se déplacer sur un premier galet (21) logé de façon stationnaire dans la cage (10), le second disque à came (19) étant logé de manière à pouvoir se déplacer dans un plan parallèle au plan commun des axes (12, 17) des deux arbres d'entraînement (11, 16), et précontraint à l'aide de moyens de pression (24) dans le sens du second disque à came (19).

13. Dispositif selon l'une quelconque des revendications 1 à 12, plusieurs sabots de scellage (13, 18) étant montés sur chaque arbre d'entraînement (11, 16) de façon uniformément répartie sur la circonférence.
